# EUROPÄISCHE PATENTSCHRIFT

(11) **EP 3 361 137 B1**
(45) Veröffentlichungstag und Bekanntmachung des Hinweises auf die Patenterteilung: **20.07.2022**
(21) Anmeldenummer: 17020056.2
(22) Anmeldetag: 13.02.2017
(51) Int. Cl.: F17C 13/00

(54) **TRANSPORTBEHÄLTER**
TRANSPORT CONTAINER
CONTENEUR

(43) Veröffentlichungstag der Anmeldung: 15.08.2018
(73) Patentinhaber: Linde GmbH, 82049 Pullach (DE)
(72) Erfinder: Posselt, Heinz, 83043 Bad Aibling (DE)
(74) Vertreter: Meilinger, Claudia Sabine

(56) Entgegenhaltungen:
- WO-A1-2005/038735
- US-A- 2 863 297
- US-A- 2 871 669
- US-A- 3 304 728
- US-A- 5 005 362
- US-A1- 2005 167 434

## Beschreibung

Die Erfindung betrifft einen Transportbehälter für Helium.

Helium wird zusammen mit Erdgas gefördert. Ein Transport großer Mengen Helium ist aus ökonomischen Gründen nur in flüssiger beziehungsweise überkritischer Form, das heißt, bei einer Temperatur von etwa 4,2 bis 6 K und unter einem Druck von 1 bis 6 bar sinnvoll. Zum Transport des flüssigen beziehungsweise überkritischen Heliums werden Transportbehälter eingesetzt, die, um einen zu schnellen Druckanstieg des Heliums zu vermeiden, aufwendig thermisch isoliert werden. Derartige Transportbehälter können beispielsweise mit Hilfe von flüssigem Stickstoff gekühlt werden. Hierbei wird ein mit dem flüssigen Stickstoff gekühlter thermischer Schild vorgesehen. Der thermische Schild schirmt einen Innenbehälter des Transportbehälters ab. In dem Innenbehälter ist das flüssige beziehungsweise tiefkalte Helium aufgenommen. Die Haltezeit für das flüssige beziehungsweise tiefkalte Helium beträgt bei derartigen Transportbehältern 35 bis 40 Tage, das heißt, nach dieser Zeit ist der Druck in dem Innenbehälter auf den Maximalwert von 6 bar gestiegen. Der Vorrat an flüssigem Stickstoff reicht für etwa 35 Tage aus.

Die EP 1 673 745 B1 beschreibt einen derartigen Transportbehälter für flüssiges Helium. Der Transportbehälter umfasst einen Innenbehälter, in dem das flüssige Helium aufgenommen ist, einen thermischen Schild, der den Innenbehälter teilweise abdeckt, einen Kühlmittelbehälter, in dem eine kryogene Flüssigkeit zum Kühlen des thermischen Schilds aufgenommen ist, und einen Außenbehälter, in dem der Innenbehälter, der thermische Schild und der Kühlmittelbehälter angeordnet sind.

Die US 2 863 297 A zeigt ebenfalls einen Transportbehälter. Der Transportbehälter umfasst einen Innenbehälter zum Aufnehmen einer ersten kryogenen Flüssigkeit, einen Kühlmittelbehälter zum Aufnehmen einer zweiten kryogenen Flüssigkeit, deren Siedepunkt unter dem der ersten kryogenen Flüssigkeit liegt, einen Außenbehälter, in dem der Innenbehälter und der Kühlmittelbehälter aufgenommen sind, einen thermischen Schild, in dem der Innenbehälter aufgenommen ist und der mit Hilfe einer flüssigen Phase der zweiten kryogenen Flüssigkeit aktiv kühlbar ist, und einen isolierenden Spalt, der zwischen dem Außenbehälter und dem thermischen Schild angeordnet ist.

Auch WO2005/038735A1 offenbart einen Transportbehälter.

Vor diesem Hintergrund besteht die Aufgabe der vorliegenden Erfindung darin, einen verbesserten Transportbehälter zur Verfügung zu stellen.

Demgemäß wird ein Transportbehälter für Helium vorgeschlagen. Der Transportbehälter umfasst einen Innenbehälter zum Aufnehmen des Heliums, einen Kühlmittelbehälter zum Aufnehmen einer kryogenen Flüssigkeit, einen Außenbehälter, in dem der Innenbehälter und der Kühlmittelbehälter aufgenommen sind, einen thermischen Schild, in dem der Innenbehälter aufgenommen ist und der mit Hilfe einer flüssigen Phase der kryogenen Flüssigkeit aktiv kühlbar ist, wobei der thermische Schild zumindest eine erste Kühlleitung aufweist, in der zum aktiven Kühlen des thermischen Schilds die flüssige Phase der kryogenen Flüssigkeit aufnehmbar ist, und ein Isolationselement, das zwischen dem Außenbehälter und dem thermischen Schild angeordnet ist und das mit Hilfe einer gasförmigen Phase der kryogenen Flüssigkeit aktiv kühlbar ist, wobei das Isolationselement zumindest eine zweite Kühlleitung aufweist, in der zum aktiven Kühlen des Isolationselements die gasförmige Phase der kryogenen Flüssigkeit aufnehmbar ist, und wobei die zumindest eine erste Kühlleitung ein von der zumindest einen zweiten Kühlleitung getrenntes Bauteil ist.

Dadurch, dass das zwischen dem thermischen Schild und dem Außenbehälter vorgesehene Isolationselement mit Hilfe der gasförmigen Phase der kryogenen Flüssigkeit aktiv gekühlt ist, kann die Helium-Haltezeit des Transportbehälters im Vergleich zu bekannten Transportbehältern erhöht werden. Vorzugsweise beträgt die Helium-Haltezeit mehr als 60 Tage. Dadurch, dass der thermische Schild vorgesehen ist, ist gewährleistet, dass der Innenbehälter nur von Flächen umgeben ist, die eine dem Siedepunkt der kryogenen Flüssigkeit (Siedepunkt Stickstoff bei 1,3 bara: 79,5 K) entsprechende Temperatur aufweisen. Hierdurch besteht zwischen dem thermischen Schild (79,5 K) und dem Innenbehälter (Temperatur des Heliums bei 1 bara bis 6 bara: 4,2 bis 6 K) im Vergleich zur Umgebung des Außenbehälters nur eine geringe Temperaturdifferenz. Auch dies erhöht die Haltezeit für das flüssige Helium.

Der Innenbehälter kann auch als Heliumbehälter oder Innentank bezeichnet werden. Der Transportbehälter kann auch als Helium-Transportbehälter bezeichnet werden. Das Helium kann als flüssiges oder tiefkaltes Helium bezeichnet werden. Das Helium ist insbesondere ebenfalls eine kryogene Flüssigkeit. Der Transportbehälter ist insbesondere dazu eingerichtet, das Helium in tiefkalter oder flüssiger beziehungsweise in überkritischer Form zu transportieren. In der Thermodynamik ist der kritische Punkt ein thermodynamischer Zustand eines Stoffes, der sich durch Angleichen der Dichten von flüssiger und Gasphase kennzeichnet. Die Unterschiede zwischen beiden Aggregatszuständen hören an diesem Punkt auf zu existieren. In einem Phasendiagramm stellt der Punkt das obere Ende der Dampfdruckkurve dar. Das Helium wird in flüssiger beziehungsweise tiefkalter Form in den Innenbehälter eingefüllt. In dem Innenbehälter bilden sich dann eine Flüssigkeitszone mit flüssigem Helium und eine Gaszone mit gasförmigem Helium. Das Helium weist also nach dem Einfüllen in den Innenbehälter zwei Phasen mit unterschiedlichen Aggregatszuständen, nämlich flüssig und gasförmig, auf. Das heißt, in dem Innenbehälter befindet sich eine Phasengrenze zwischen dem flüssigen Helium und dem gasförmigen Helium. Nach einer gewissen Zeit, das heißt, wenn der Druck in dem Innenbehälter steigt, wird das sich in dem Innenbehälter befindende Helium einphasig. Die Phasengrenze existiert dann nicht mehr und das Helium ist überkritisch.

Die kryogene Flüssigkeit oder das Kryogen ist vorzugsweise flüssiger Stickstoff. Die kryogene Flüssigkeit kann auch als Kühlmittel bezeichnet werden. Die kryogene Flüssigkeit kann alternativ beispielsweise auch flüssiger Wasserstoff oder flüssiger Sauerstoff sein. Darunter, dass der thermische Schild aktiv kühlbar oder aktiv gekühlt ist, ist zu verstehen, dass der thermische Schild von der flüssigen Phase der kryogenen Flüssigkeit zumindest partiell durchströmt oder umströmt wird, um diesen zu kühlen. In der ersten Kühlleitung kann die kryogene Flüssigkeit sowohl in ihrer gasförmigen als auch in ihrer flüssigen Phase aufgenommen sein. Ebenso wird das Isolationselement zum aktiven Kühlen desselben von der gasförmigen Phase der kryogenen Flüssigkeit zumindest partiell durchströmt oder umströmt, um dieses zu kühlen.

Insbesondere sind der thermische Schild und das Isolationselement nur in einem Betriebszustand des Transportbehälters, das heißt, dann, wenn der Innenbehälter mit Helium gefüllt ist, aktiv gekühlt. Wenn die kryogene Flüssigkeit verbraucht ist, können der thermische Schild und das Isolationselement auch ungekühlt sein. Bei dem aktiven Kühlen des thermischen Schilds kann die kryogene Flüssigkeit sieden und verdampfen. Der thermische Schild weist hierdurch eine Temperatur auf, die annähernd oder genau dem Siedepunkt der kryogenen Flüssigkeit entspricht. Der Siedepunkt der kryogenen Flüssigkeit ist vorzugsweise höher als der Siedepunkt des flüssigen Heliums. Die verdampften Anteile der kryogenen Flüssigkeit werden zum Kühlen des Isolationselements verwendet. Der thermische Schild ist insbesondere innerhalb des Außenbehälters angeordnet. Vorzugsweise ist der Kühlmittelbehälter außerhalb des thermischen Schilds angeordnet. Die erste Kühlleitung ist ein von der zweiten Kühlleitung getrenntes Bauteil. Das heißt, die erste Kühlleitung entspricht nicht der zweiten Kühlleitung. Das Isolationselement ist zwischen dem Außenbehälter und dem thermischen Schild angeordnet. Bevorzugt füllt das Isolationselement einen zwischen dem thermischen Schild und dem Außenbehälter vorgesehenen Zwischenraum aus. Das Isolationselement kann auch den Kühlmittelbehälter umhüllen.

Vorzugsweise weist der Innenbehälter außenseitig eine Temperatur auf, die annähernd oder genau der Temperatur des in dem Innenbehälter gespeicherten Heliums entspricht. Die Temperatur des Heliums beträgt, je nachdem ob das Helium in flüssiger oder überkritischer Form vorliegt, 4,2 bis 6 K. Vorzugsweise schließt ein Deckelabschnitt des thermischen Schilds einen Basisabschnitt desselben jeweils stirnseitig vollständig ab. Der Basisabschnitt des thermischen Schilds kann einen kreisrunden oder einen annähernd kreisrunden Querschnitt aufweisen. Der Außenbehälter, der Innenbehälter, der Kühlmittelbehälter und der thermische Schild können rotationssymmetrisch zu einer gemeinsamen Symmetrie- oder Mittelachse aufgebaut sein. Der Innenbehälter und der Außenbehälter sind vorzugsweise aus Edelstahl gefertigt. Der Innenbehälter weist vorzugsweise einen rohrförmigen Basisabschnitt auf, der beidseitig mit gewölbten Deckelabschnitten verschlossen ist. Der Innenbehälter ist fluiddicht. Der Außenbehälter weist vorzugsweise ebenfalls einen rohrförmigen Basisabschnitt auf, der stirnseitig beidseits von Deckelabschnitten verschlossen ist. Der Basisabschnitt des Innenbehälters und/oder der Basisabschnitt des Außenbehälters können einen kreisrunden oder einen annähernd kreisrunden Querschnitt aufweisen. Der thermische Schild ist vorzugsweise aus einem hochreinen Aluminiumwerkstoff gefertigt. Der thermische Schild ist vorzugsweise nicht fluiddicht. Gemäß einer Ausführungsform umfasst der Transportbehälter ferner einen Phasenseparator zum Trennen der flüssigen Phase der kryogenen Flüssigkeit von der gasförmigen Phase der kryogenen Flüssigkeit.

Vorzugsweise ist der Phasenseparator außerhalb des Außenbehälters angeordnet. Alternativ kann der Phasenseparator auch innerhalb des Außenbehälters angeordnet sein. Mit Hilfe des Phasenseparators können die sich in der ersten Kühlleitung bildenden Gasblasen der kryogenen Flüssigkeit von der flüssigen Phase derselben abgetrennt werden. Der Phasenseparator umfasst vorzugsweise einen Schwimmer mit einem Schwimmkörper, der mit einem Ventilkörper gekoppelt ist. Sobald der Flüssigkeitsstand der flüssigen Phase in dem Phasenseparator durch das Einleiten der Gasblasen absinkt, wird der Ventilkörper von einem Ventilsitz abgehoben und die gasförmige Phase der kryogenen Flüssigkeit wird abgetrennt. Hierdurch strömt die flüssige Phase in den Phasenseparator nach, wodurch der Schwimmkörper wieder aufschwimmt und der Ventilkörper auf den Ventilsitz gedrückt wird. Insbesondere sorgt der Phasenseparator dafür, dass nur verdampfter, tiefkalter Stickstoff an die zweite Kühlleitung abgegeben wird.

Gemäß einer weiteren Ausführungsform ist der Phasenseparator mit Hilfe der zumindest einen ersten Kühlleitung in Fluidverbindung mit dem Kühlmittelbehälter.

Die Anzahl der ersten Kühlleitungen ist beliebig. Vorzugsweise sind mehrere erste Kühlleitungen vorgesehen. Beispielsweise können sechs erste Kühlleitungen vorgesehen sein. Die ersten Kühlleitungen sind vorzugsweise in einem Winkel zu einer Horizontalen geneigt, so dass in den ersten Kühlleitungen entstehende Gasblasen selbstständig zu dem Phasenseparator hin aufsteigen. Insbesondere verbindet die zumindest eine erste Kühlleitung den Kühlmittelbehälter fluidisch mit dem Phasenseparator.

Gemäß einer weiteren Ausführungsform ist der Phasenseparator zwischen der zumindest einen ersten Kühlleitung und der zumindest einen zweiten Kühlleitung angeordnet.

Vorzugsweise sind mehrere zweite Kühlleitungen vorgesehen. Die Anzahl der zweiten Kühlleitungen ist beliebig. Bevorzugt sind drei oder fünf zweite Kühlleitungen vorgesehen. Insbesondere sind die zweiten Kühlleitungen bezüglich des Kühlmittelbehälters stromabwärts des Phasenseparators angeordnet. Die zumindest eine erste Kühlleitung ist stromaufwärts des Phasenseparators positioniert.

Gemäß einer weiteren Ausführungsform ist die zumindest eine zweite Kühlleitung in direkter Fluidverbindung mit dem Kühlmittelbehälter, um von diesem die gasförmige Phase der kryogenen Flüssigkeit aufzunehmen.

Vorzugsweise sind optionale zweite Kühlleitungen vorgesehen, die nicht direkt mit dem Phasenseparator verbunden sind, sondern in direkter Fluidverbindung mit dem Kühlmittelbehälter stehen. Hierdurch kann sogenanntes Blow-Off-Gas aus dem Kühlmittelbehälter zum Kühlen des Isolationselements entnommen werden.

Gemäß einer weiteren Ausführungsform ist die zumindest eine zweite Kühlleitung durch das Isolationselement hindurchgeführt.

Das heißt, die zumindest eine zweite Kühlleitung ist insbesondere nicht außenseitig oder innenseitig an dem Isolationselement vorgesehen, sondern ist innerhalb diesem angeordnet.

Gemäß einer weiteren Ausführungsform weist das Isolationselement mehrere abwechselnd angeordnete Lagen aus einer Reflexionsfolie, insbesondere einer Aluminiumfolie, und einem Abstandhalter, insbesondere einem Glaspapier, auf, wobei die zumindest eine zweite Kühlleitung zwischen den Lagen hindurchgeführt ist.

Das Isolationselement kann eine sogenannte MLI (engl.: Multilayer Insulation) sein. Die Reflexionsfolie kann neben Aluminiumfolie oder anderen Metallfolien auch metallbedampfte Kunststofffolien umfassen. Der Abstandhalter kann Glaspapier, Glasgewebe, Glasseide, Glasgittergewebe oder dergleichen umfassen. Die Lagen aus Reflexionsfolie dienen dabei als Reflektor und als mechanische Fixierung für die Lagen aus Abstandhalter, die die thermische Dämmung für den Fall eines Vakuumzusammenbruchs gewährleisten. Die Reflexionsfolie kann perforiert und/oder geprägt sein. Das Isolationselement füllt vorzugsweise einen zwischen dem thermischen Schild und dem Außenbehälter vorgesehenen Zwischenraum vollständig aus, so dass das Isolationselement sowohl den thermischen Schild als auch den Außenbehälter kontaktiert.

Dadurch, dass der Abstandhalter zwischen den Reflexionsfolien angeordnet ist, kann das zwischen dem thermischen Schild und dem Außenbehälter angeordnete Isolationselement störungsfrei evakuiert werden. Auch wird ein unerwünschter mechanisch-thermischer Kontakt zwischen den Lagen an Reflexionsfolie reduziert. Dieser Kontakt könnte den sich durch Strahlungsaustausch einstellenden Temperaturgradienten der Lagen an Reflexionsfolie stören. Vorzugsweise sind die Lagen aus Reflexionsfolie und Abstandhalter spaltbehaftet auf dem thermischen Schild aufgebracht. Unter spaltbehaftet ist zu verstehen, dass zwischen den Lagen aus Reflexionsfolie und Abstandhalter jeweils evakuierbare Zwischenräume vorgesehen sind. Vorzugsweise sind die Lagen aus Reflexionsfolie und Abstandhalter flauschig in den zwischen dem thermischen Schild und dem Außenbehälter vorgesehenen Zwischenraum eingebracht. Flauschig heißt hierbei, dass die Lagen aus Reflexionsfolie und Abstandhalter nicht gepresst sind, so dass durch die Prägung und Perforierung der Reflexionsfolie das Isolationselement und damit der Zwischenraum störungsfrei evakuiert werden kann.

Gemäß einer weiteren Ausführungsform weist das Isolationselement zumindest eine Wärmeleitfolie, insbesondere eine hochreine Aluminium- oder Kupferfolie auf, mit der die zumindest eine zweite Kühlleitung thermisch leitend verbunden ist, wobei die zumindest eine Wärmeleitfolie zwischen den Lagen der Reflexionsfolie und des Abstandhalters positioniert ist.

Vorzugsweise ist zwischen dem thermischen Schild und der zumindest einen Wärmeleitfolie eine beliebige Anzahl an Lagen der Reflexionsfolie und des Abstandhalters positioniert. Weiterhin ist auch zwischen der zumindest einen Wärmeleitfolie und dem Außenbehälter eine beliebige Anzahl an Lagen der Reflexionsfolie und des Abstandhalters positioniert. Vorzugsweise ist die zumindest eine zweite Kühlleitung stoffschlüssig mit der zumindest einen Wärmeleitfolie verbunden. Für den Fall, dass die Wärmeleitfolie aus einem Aluminiumwerkstoff gefertigt ist, ist die zumindest eine zweite Kühlleitung mit der Wärmeleitfolie bevorzugt verklebt. Für den Fall, dass die zumindest eine Wärmeleitfolie aus einem Kupferwerkstoff gefertigt ist, ist die zumindest eine zweite Kühlleitung mit der zumindest einen Wärmeleitfolie bevorzugt verlötet. Die Wärmeleitfolie kann auch als Wärmeübertragungsfolie bezeichnet werden.

Gemäß einer weiteren Ausführungsform umschließt die zumindest eine Wärmeleitfolie den thermischen Schild.

Vorzugsweise umläuft die zumindest eine Wärmeleitfolie den thermischen Schild umfänglich. In einer axialen Richtung des Transportbehälters können Abstände zwischen einzelnen Bahnen der Wärmeleitfolie vorgesehen sein. Die Abstände können beispielsweise 0,1 bis 1 Meter betragen. Das heißt, die zumindest eine Wärmeleitfolie kapselt den thermischen Schild nicht vollständig ein.

Gemäß einer weiteren Ausführungsform weist das Isolationselement mehrere Wärmeleitfolien auf, wobei zwischen den Wärmeleitfolien Lagen der Reflexionsfolie und des Abstandhalters angeordnet sind.

Beispielsweise sind drei derartige Wärmeleitfolien vorgesehen. Die Anzahl der Wärmeleitfolien ist beliebig. Vorzugsweise ist zwischen dem Außenbehälter und dem thermischen Schild eine erste Wärmeleitfolie, zwischen der ersten Wärmeleitfolie und dem thermischen Schild eine zweite Wärmeleitfolie und zwischen der zweiten Wärmeleitfolie und dem thermischen Schild eine dritte Wärmeleitfolie vorgesehen. Zwischen zwei benachbarten Wärmeleitfolien ist eine beliebige Anzahl an Lagen der Reflexionsfolie und des Abstandhalters vorgesehen.

Gemäß einer weiteren Ausführungsform ist jeder Wärmeleitfolie eine zweite Kühlleitung zugeordnet, die mit der jeweiligen Wärmeleitfolie thermisch leitend verbunden ist.

Vorzugsweise ist jede zweite Kühlleitung mit der ihr zugeordneten Wärmeleitfolie stoffschlüssig verbunden. Die zweiten Kühlleitungen können auch mit unterschiedlichen, das heißt, mit mehreren, Wärmeleitfolien thermisch leitend und insbesondere stoffschlüssig verbunden sein.

Gemäß einer weiteren Ausführungsform stehen die zweiten Kühlleitungen mit Hilfe von Rohrbögen miteinander in Fluidverbindung.

Hierdurch ergibt sich eine schlangenförmige oder mäanderförmige Anordnung der zweiten Kühlleitungen.

Gemäß einer weiteren Ausführungsform ist eine Dicke der zumindest einen Wärmeleitfolie größer als eine Dicke der Reflexionsfolie.

Beispielsweise weist die Wärmeleitfolie eine Dicke von 0,5 bis 1,5 Millimeter auf.

Gemäß einer weiteren Ausführungsform ist der Kühlmittelbehälter außerhalb des thermischen Schilds angeordnet.

Vorzugsweise ist der Kühlmittelbehälter in einer Axialrichtung des Transportbehälters neben dem thermischen Schild positioniert. Zwischen dem Kühlmittelbehälter und dem thermischen Schild ist ein Zwischenraum vorgesehen. Der Kühlmittelbehälter ist vorzugsweise nicht Teil des thermischen Schilds.

Gemäß einer weiteren Ausführungsform weist der thermische Schild einen von dem Kühlmittelbehälter getrennten Deckelabschnitt auf, der zwischen dem Innenbehälter und dem Kühlmittelbehälter angeordnet ist.

Vorzugsweise weist der thermische Schild den rohrförmigen Basisabschnitt auf, der beidseitig von den Deckelabschnitten verschlossen ist. Zwischen dem Innenbehälter und dem Kühlmittelbehälter ist einer der Deckelabschnitte des thermischen Schilds angeordnet. Der Deckelabschnitt des Kühlmittelbehälters ist insbesondere in dem zwischen dem Innenbehälter und dem Kühlmittelbehälter vorgesehenen Zwischenraum positioniert.

Weitere mögliche Implementierungen des Transportbehälters umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform des Transportbehälters hinzufügen.

Weitere vorteilhafte Ausgestaltungen des Transportbehälters sind Gegenstand der Unteransprüche sowie der im Folgenden beschriebenen Ausführungsbeispiele des Transportbehälters. Im Weiteren wird der Transportbehälter anhand von bevorzugten Ausführungsformen unter Bezugnahme auf die beigelegten Figuren näher erläutert.
Fig. 1 zeigt eine schematische Ansicht einer Ausführungsform eines Transportbehälters;
Fig. 2 zeigt eine weitere schematische Ansicht des Transportbehälters gemäß Fig. 1;
Fig. 3 zeigt eine weitere schematische Ansicht des Transportbehälters gemäß Fig. 1;
Fig. 4 zeigt eine Schnittansicht des Transportbehälters gemäß der Schnittlinie IV-IV der Fig. 3; und
Fig. 5 zeigt eine schematische Detailansicht des Transportbehälters gemäß Fig. 1.

In den Figuren sind gleiche oder funktionsgleiche Elemente mit denselben Bezugszeichen versehen worden, sofern nichts anderes angegeben ist.

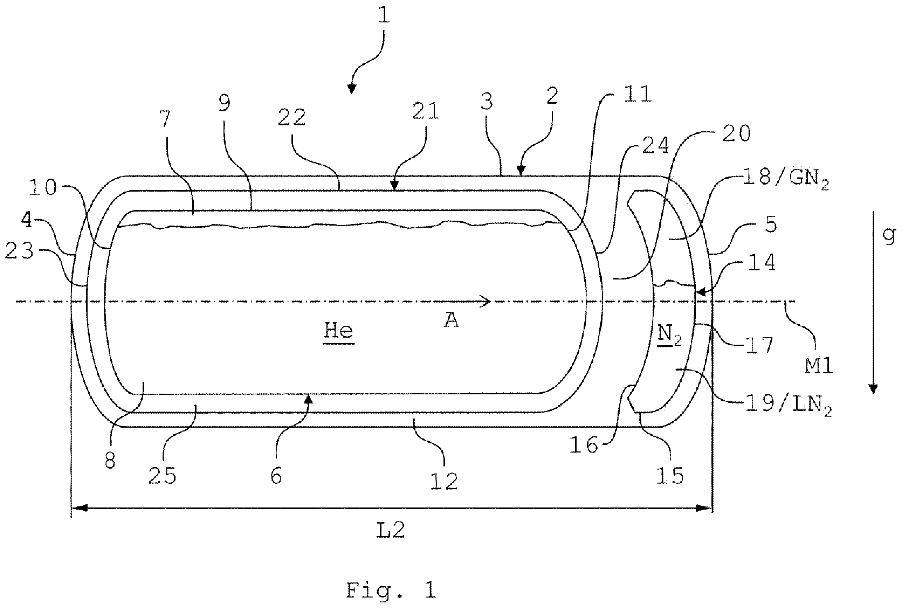

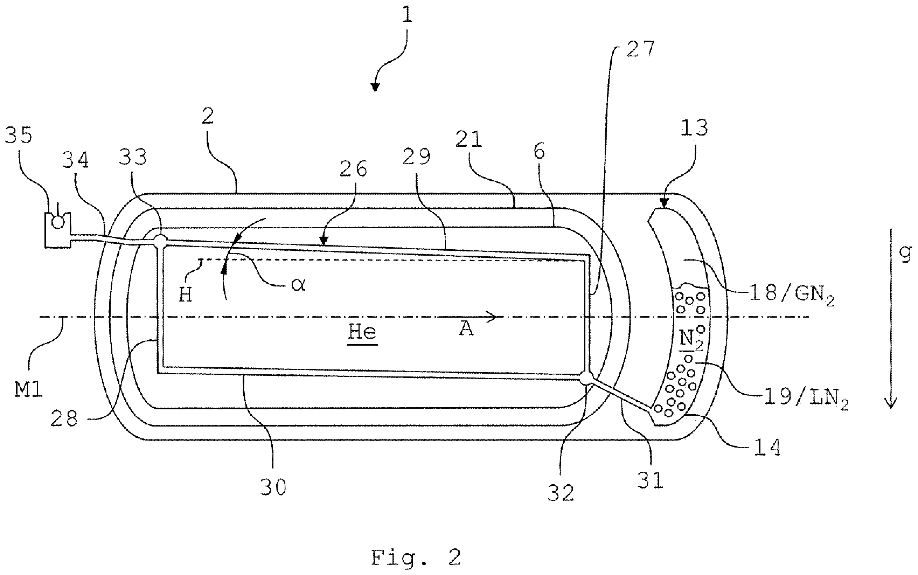

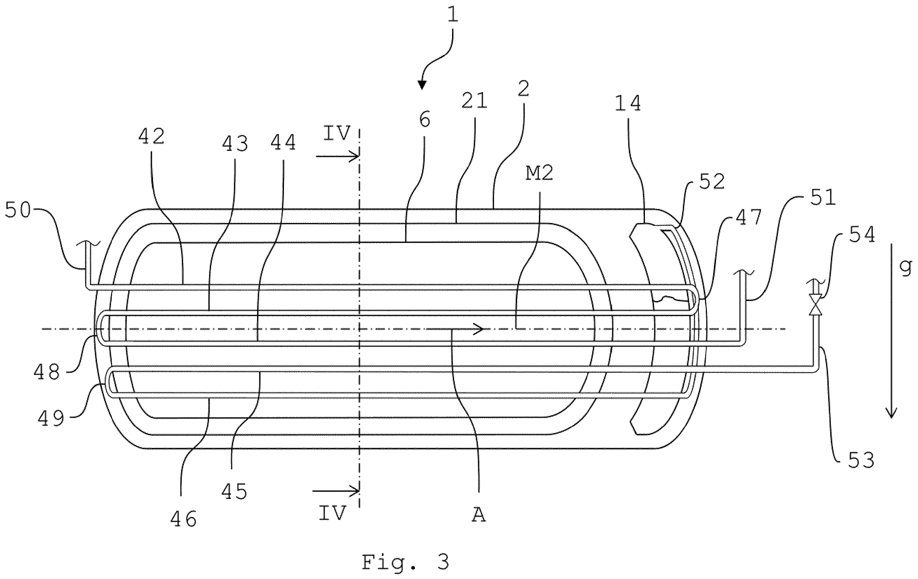

Die Fig. 1 zeigt eine stark vereinfachte schematische Ansicht einer Ausführungsform eines Transportbehälters 1 für flüssiges Helium He. Die Fig. 2 und 3 zeigen weitere schematische Ansichten des Transportbehälters 1. Im Folgenden wird auf die Fig. 1 bis 3 gleichzeitig Bezug genommen.

Der Transportbehälter 1 kann auch als Helium-Transportbehälter bezeichnet werden. Der Transportbehälter 1 kann auch für andere kryogene Flüssigkeiten eingesetzt werden. Beispiele für kryogene Flüssigkeiten, oder kurz Kryogene, sind das zuvor erwähnte flüssige Helium He (Siedepunkt bei 1 bara: 4,222 K = -268,929 °C), flüssiger Wasserstoff H₂ (Siedepunkt bei 1 bara: 20,268 K = -252,882 °C), flüssiger Stickstoff N₂ (Siedepunkt bei 1 bara: 7,35 K = -195,80 °C) oder flüssiger Sauerstoff O₂ (Siedepunkt bei 1 bara: 90,18 K = -182,97 °C).

Der Transportbehälter 1 umfasst einen Außenbehälter 2. Der Außenbehälter 2 ist beispielsweise aus Edelstahl gefertigt. Der Außenbehälter 2 kann eine Länge L2 von beispielsweise 10 Meter aufweisen. Der Außenbehälter 2 umfasst einen rohr- oder zylinderförmigen Basisabschnitt 3, der stirnseitig beidseits jeweils mit Hilfe eines Deckelabschnitts 4, 5, insbesondere mit Hilfe eines ersten Deckelabschnitts 4 und eines zweiten Deckelabschnitts 5, verschlossen ist. Der Basisabschnitt 3 kann im Querschnitt eine kreisrunde oder annähernd kreisrunde Geometrie aufweisen. Die Deckelabschnitte 4, 5 sind gewölbt. Die Deckelabschnitte 4, 5 sind gegensinnig gewölbt, so dass beide Deckelabschnitte 4, 5 bezüglich des Basisabschnitts 3 nach außen gewölbt sind. Der Außenbehälter 2 ist fluiddicht, insbesondere gasdicht. Der Außenbehälter 2 weist eine Symmetrie- oder Mittelachse M1 auf, zu der der Außenbehälter 2 rotationssymmetrisch aufgebaut ist.

Der Transportbehälter 1 umfasst weiterhin einen Innenbehälter 6 zum Aufnehmen des Heliums He. Der Innenbehälter 6 ist beispielsweise ebenfalls aus Edelstahl gefertigt. In dem Innenbehälter 6 können, solange sich das Helium He im Zweiphasengebiet befindet, eine Gaszone 7 mit verdampftem Helium He und eine Flüssigkeitszone 8 mit flüssigem Helium He vorgesehen sein. Der Innenbehälter 6 ist fluiddicht, insbesondere gasdicht, und kann ein Abblasventil zum gesteuerten Druckabbau umfassen. Der Innenbehälter 6 umfasst wie der Außenbehälter 2 einen rohr- oder zylinderförmigen Basisabschnitt 9, der beidseitig stirnseitig von Deckelabschnitten 10, 11, insbesondere einem ersten Deckelabschnitt 10 und einem zweiten Deckelabschnitt 11, verschlossen ist. Der Basisabschnitt 9 kann im Querschnitt eine kreisrunde oder annähernd kreisrunde Geometrie aufweisen.

Der Transportbehälter 1 umfasst weiterhin ein Kühlsystem 13 (Fig. 2) mit einem Kühlmittelbehälter 14. Der Innenbehälter 6 ist vollständig von dem Außenbehälter 2 umschlossen. Der Innenbehälter 6 ist, wie der Außenbehälter 2, rotationssymmetrisch zu der Mittelachse M1 ausgebildet. Ein zwischen dem Innenbehälter 6, dem Kühlmittelbehälter 14 und dem Außenbehälter 2 vorgesehener Spalt oder Zwischenraum 12 ist evakuiert. In dem Zwischenraum 12 kann ein in den Fig. 1 bis 3 nicht gezeigtes Isolationselement angeordnet sein, das den Zwischenraum 12 ausfüllt. Der Zwischenraum 12 hüllt den Innenbehälter 6 und den Kühlmittelbehälter 14 vollständig ein.

In dem Kühlmittelbehälter 14 ist eine kryogene Flüssigkeit, wie beispielsweise Stickstoff N₂, aufgenommen. Der Kühlmittelbehälter 14 umfasst einen rohr- oder zylinderförmigen Basisabschnitt 15, der rotationssymmetrisch zu der Mittelachse M1 aufgebaut sein kann. Der Basisabschnitt 15 kann im Querschnitt eine kreisrunde oder annähernd kreisrunde Geometrie aufweisen. Der Basisabschnitt 15 ist stirnseitig jeweils durch einen Deckelabschnitt 16, 17, insbesondere durch einen ersten Deckelabschnitt 16 und einen zweiten Deckelabschnitt 17, verschlossen. Die Deckelabschnitte 16, 17 können gewölbt sein. Insbesondere sind die Deckelabschnitte 16, 17 in die gleiche Richtung gewölbt. Der Kühlmittelbehälter 14 kann auch einen abweichenden Aufbau haben. Der Kühlmittelbehälter 14 ist außerhalb des Innenbehälters 6, jedoch innerhalb des Außenbehälters 2 angeordnet.

In dem Kühlmittelbehälter 14 kann eine Gaszone 18 mit verdampftem oder gasförmigem Stickstoff GN₂ und eine Flüssigkeitszone 19 mit flüssigem Stickstoff LN₂ vorgesehen sein. In einer Axialrichtung A des Innenbehälters 6 betrachtet ist der Kühlmittelbehälter 14 neben dem Innenbehälter 6 angeordnet. Die Axialrichtung A ist parallel zu der Mittelachse M1 positioniert. Die Axialrichtung A kann von dem ersten Deckelabschnitt 4 des Außenbehälters 2 in Richtung des zweiten Deckelabschnitts 5 des Außenbehälters 2 orientiert sein. Zwischen dem Innenbehälter 6, insbesondere zwischen dem zweiten Deckelabschnitt 11 des Innenbehälters 6, und dem Kühlmittelbehälter 14, insbesondere dem ersten Deckelabschnitt 16 des Kühlmittelbehälters 14, ist ein Spalt oder Zwischenraum 20 vorgesehen, der Teil des Zwischenraums 12 sein kann. Das heißt, der Zwischenraum 20 ist ebenfalls evakuiert.

Der Transportbehälter 1 umfasst weiterhin einen dem Kühlsystem 13 zugeordneten thermischen Schild 21. Der thermische Schild 21 ist in dem zwischen dem Innenbehälter 6 und dem Außenbehälter 2 vorgesehenen evakuierten Zwischenraum 12 angeordnet. Der thermische Schild 21 ist mit Hilfe des flüssigen Stickstoffs LN₂ aktiv kühlbar oder aktiv gekühlt. Unter einer aktiven Kühlung ist vorliegend zu verstehen, dass der flüssige Stickstoff LN₂ zur Kühlung des thermischen Schilds 21 durch diesen hindurchgeleitet oder an diesem entlanggeleitet wird. Der thermische Schild 21 wird hierbei auf eine Temperatur abgekühlt, die etwa dem Siedepunkt des Stickstoffs N₂ entspricht.

Der thermische Schild 21 umfasst einen zylinder- oder rohrförmigen Basisabschnitt 22, der beidseitig von einem diesen stirnseitig abschließenden Deckelabschnitt 23, 24, insbesondere einem ersten Deckelabschnitt 23 und einem zweiten Deckelabschnitt 24, abgeschlossen ist. Sowohl der Basisabschnitt 22 als auch die Deckelabschnitte 23, 24 sind mit Hilfe des Stickstoffs N₂ aktiv gekühlt. Der Basisabschnitt 22 kann im Querschnitt eine kreisrunde oder annähernd kreisrunde Geometrie aufweisen. Der thermische Schild 21 ist vorzugsweise ebenfalls rotationssymmetrisch zu der Mittelachse M1 aufgebaut. Der zweite Deckelabschnitt 24 des thermischen Schilds 21 ist zwischen dem Innenbehälter 6, insbesondere dem zweiten Deckelabschnitt 11 des Innenbehälters 6, und dem Kühlmittelbehälter 14, insbesondere dem ersten Deckelabschnitt 16 des Kühlmittelbehälters 14, angeordnet.

Der zweite Deckelabschnitt 24 des thermischen Schilds 21 ist ein von dem Kühlmittelbehälter 14 getrenntes Bauteil. Das heißt, der erste Deckelabschnitt 23 ist nicht Teil des Kühlmittelbehälters 14. In der Axialrichtung A betrachtet ist der zweite Deckelabschnitt 24 des thermischen Schilds 21 zwischen dem Innenbehälter 6, insbesondere dem zweiten Deckelabschnitt 11 des Innenbehälters 6, und dem Kühlmittelbehälter 14, insbesondere dem ersten Deckelabschnitt 16 des Kühlmittelbehälters 14, angeordnet. Der Zwischenraum 12 hüllt den thermischen Schild 21 vollständig ein.

Der erste Deckelabschnitt 23 des thermischen Schilds 21 ist dem Kühlmittelbehälter 14 abgewandt. Der erste Deckelabschnitt 23 des thermischen Schilds 21 ist zwischen dem ersten Deckelabschnitt 4 des Außenbehälters 2 und dem ersten Deckelabschnitt 10 des Innenbehälters 6 angeordnet. Der thermische Schild 21 ist dabei selbsttragend. Das heißt, der thermische Schild 21 stützt sich weder auf dem Innenbehälter 6 noch auf dem Außenbehälter 2 ab. Hierzu kann an dem thermischen Schild 21 ein Tragring vorgesehen sein, der über Abstützungsstäbe, insbesondere Zugstäbe, an dem Außenbehälter 2 abgehängt ist. Weiterhin kann der Innenbehälter 6 über weitere Abstützungsstäbe, insbesondere Zugstäbe, an dem Tragring abgehängt sein. Der Wärmeeinfall durch die mechanischen Abstützungsstäbe wird teilweise durch den Tragring realisiert. Der Tragring besitzt Taschen, die eine größtmögliche thermische Länge der Abstützungsstäbe ermöglichen. Der Kühlmittelbehälter 14 kann Durchführungen für die mechanischen Abstützungsstäbe umfassen.

Der thermische Schild 21 ist fluiddurchlässig. Das heißt, ein Spalt oder Zwischenraum 25 zwischen dem Innenbehälter 6 und dem thermischen Schild 21 ist in Fluidverbindung mit dem Zwischenraum 12. Hierdurch können die Zwischenräume 12, 25 gleichzeitig evakuiert werden. Der Zwischenraum 25 hüllt den Innenbehälter 6 vollständig ein. In dem Zwischenraum 25 kann ein weiteres, in den Fig. 1 bis 3 nicht gezeigtes, Isolationselement angeordnet sein. In dem thermischen Schild 21 können Bohrungen, Durchbrüche oder dergleichen vorgesehen sein, um ein Evakuieren der Zwischenräume 12, 25 zu ermöglichen. Der thermische Schild 21 ist vorzugsweise aus einem hochreinen Aluminiumwerkstoff gefertigt.

Der zweite Deckelabschnitt 24 des thermischen Schilds 21 schirmt den Kühlbehälter 14 vollständig gegenüber dem Innenbehälter 6 ab. Das heißt, mit Blickrichtung von dem Innenbehälter 6 auf den Kühlmittelbehälter 14, das heißt, mit Blickrichtung in der Axialrichtung A, ist der Kühlmittelbehälter 14 vollständig von dem zweiten Deckelabschnitt 24 des thermischen Schilds 21 abgedeckt. Insbesondere umschließt der thermische Schild 21 den Innenbehälter 6 dabei vollständig. Das heißt, der Innenbehälter 6 ist vollständig innerhalb des thermischen Schilds 21 angeordnet, wobei der thermische Schild 21, wie zuvor schon erwähnt, nicht fluiddicht ist.

Wie die Fig. 2 weiterhin zeigt, umfasst der thermische Schild 21 zum aktiven Kühlen desselben zumindest eine erste Kühlleitung 26. Die erste Kühlleitung 26 ist dem Kühlsystem 13 zugeordnet. Vorzugsweise sind mehrere derartige erste Kühlleitungen 26, beispielsweise sechs derartige erste Kühlleitungen 26, vorgesehen. Die Anzahl der ersten Kühlleitungen 26 ist jedoch beliebig. Die erste Kühlleitung 26 kann zwei in einer Schwerkraftrichtung g verlaufende, senkrechte Abschnitte 27, 28 sowie zwei schräge Abschnitte 29, 30 umfassen. Die senkrechten Abschnitte 27, 28 können an den Deckelabschnitten 23, 24 und/oder an dem Basisabschnitt 22 des thermischen Schilds 21 vorgesehen sein. Die schrägen Abschnitte 29, 30 können ebenfalls an den Deckelabschnitten 23, 24 und/oder an dem Basisabschnitt 22 vorgesehen sein.

Die erste Kühlleitung 26 ist stoffschlüssig mit dem thermischen Schild 21 verbunden. Bei stoffschlüssigen Verbindungen werden die Verbindungspartner durch atomare oder molekulare Kräfte zusammengehalten. Stoffschlüssige Verbindungen sind nicht lösbare Verbindungen, die sich nur durch Zerstörung der Verbindungsmittel oder der Verbindungspartner trennen lassen. Stoffschlüssig kann beispielsweise durch Kleben, Löten, Schweißen oder Vulkanisieren verbunden werden. Vorzugsweise ist die erste Kühlleitung 26 beziehungsweise sind die ersten Kühlleitungen 26 mit dem thermischen Schild 21 verschweißt, verlötet oder verklebt.

Die erste Kühlleitung 26 ist über eine Anschlussleitung 31 mit dem Kühlmittelbehälter 14 in Fluidverbindung, so dass der flüssige Stickstoff LN₂ von dem Kühlmittelbehälter 14 in die erste Kühlleitung 26 gedrückt wird. Die Anschlussleitung 31 mündet in einen Verteiler 32, von dem der Abschnitt 27 und der Abschnitt 30 abzweigen. Der Abschnitt 29 und der Abschnitt 28 treffen sich an einem Sammler 33, von dem eine Anschlussleitung 34 zu einem außerhalb des Außenbehälters 2 angeordneten Phasenseparator 35 führt. Der Phasenseparator 35 kann auch innerhalb des Außenbehälters 2 positioniert sein. Der Phasenseparator 35 ist dazu eingerichtet, gasförmigen Stickstoff GN₂ von flüssigem Stickstoff LN₂ zu trennen. Mit Hilfe des Phasenseparators 35 kann ferner der gasförmige Stickstoff GN₂ aus der ersten Kühlleitung 26 entfernt werden.

Wie zuvor erwähnt, sind die erste Kühlleitung 26 oder die ersten Kühlleitungen 26 sowohl an dem Basisabschnitt 22 als auch an den Deckelabschnitten 23, 24 des thermischen Schilds 21 vorgesehen. Alternativ sind die Deckelabschnitte 23, 24 materialeinteilig, insbesondere stoffschlüssig, mit dem Basisabschnitt 22 verbunden. Beispielsweise sind die Deckelabschnitte 23, 24 mit dem Basisabschnitt 22 verschweißt. Dadurch, dass die Deckelabschnitte 23, 24 materialeinteilig, das heißt, stoffschlüssig, mit dem Basisabschnitt 22 verbunden sind, kann die Kühlung der Deckelabschnitte 23, 24 durch Wärmeleitung erfolgen.

Die erste Kühlleitung 26, und insbesondere die schrägen Abschnitte 29, 30 der ersten Kühlleitung 26 weisen gegenüber einer Horizontalen H, die senkrecht zu der Schwerkraftrichtung g angeordnet ist, eine Steigung auf. Insbesondere schließen die Abschnitte 29, 30 mit der Horizontalen H einen Winkel α von größer als 3° ein. Der Winkel α kann 3 bis 15° oder auch mehr betragen. Insbesondere kann der Winkel α auch genau 3° betragen. Insbesondere weisen die Abschnitte 29, 30 in Richtung des Phasenseparators 35 eine positive Steigung auf, so dass Gasblasen zu dem Phasenseparator 35 aufsteigen.

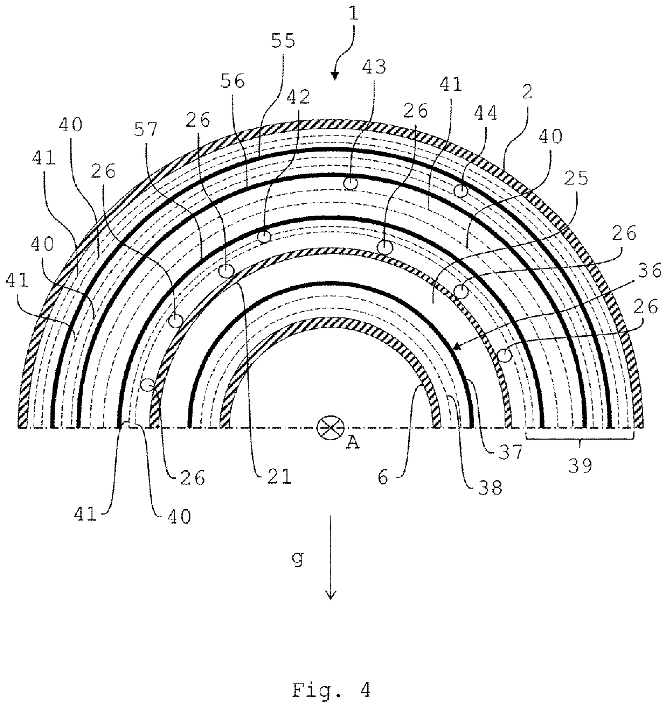

Der Innenbehälter 6 umfasst ein in der Fig. 4 gezeigtes Isolationselement 36. Das Isolationselement 36 umschließt den Innenbehälter 6 vollständig, das heißt, das Isolationselement 36 ist sowohl an dem Basisabschnitt 9 als auch an den Deckelabschnitten 10, 11 des Innenbehälters 6 vorgesehen. Das Isolationselement 36 kapselt den Innenbehälter 6 ein. Das Isolationselement 36 ist zwischen dem Innenbehälter 6 und dem thermischen Schild 21 in dem Zwischenraum 25 angeordnet und füllt diesen teilweise aus. Das Isolationselement 36 weist außenseitig, das heißt dem thermischen Schild 21 zugewandt, eine hochreflektierende Kupferschicht 37 auf. Die Kupferschicht 37 ist metallisch blank. Das heißt, die Kupferschicht 37 weist keine Oberflächenbeschichtung oder Oxidschicht auf. Die Kupferschicht 37 kann beispielsweise eine Kupferfolie oder eine mit Kupfer bedampfte Aluminiumfolie sein.

Die eigentliche thermische Dämmung des Innenbehälters 6 zum Temperaturniveau des flüssigen Stickstoffs LN₂ des thermischen Schilds 21 erfolgt durch die Kupferschicht 37. Vorzugsweise ist die Kupferschicht 37 eine glatte Folie aus hochreinem blanken Kupfer, die stramm und ohne Falten um eine zwischen der Kupferschicht 37 und dem Innenbehälter 6 angeordnete mehrlagige Isolationsschicht 38 aufgezogen ist. Die Isolationsschicht 38 umfasst mehrere abwechselnd angeordnete Schichten oder Lagen aus einer Reflexionsfolie und einem Abstandhalter. Die Reflexionsfolie kann eine perforierte und geprägte Aluminiumfolie oder eine metallbedampfte Kunststofffolie sein. Der Abstandhalter kann beispielsweise Glaspapier oder Glasgewebe umfassen. Die Reflexionsfolie dient als Reflektor und der Abstandhalter beabstandet die Lagen aus Reflexionsfolie voneinander und dient als Dämmung bei einem Vakuumzusammenbruch zwischen den Reflexionsfolien.

Die Isolationsschicht 38 kann beispielsweise zehnlagig sein. Die Lagen aus Reflexionsfolie und Abstandhalter sind spaltfrei auf dem Innenbehälter 6 aufgebracht, das heißt, gepresst. Die Isolationsschicht 38 kann eine sogenannte MLI (engl.: Multilayer Insulation) sein. Der Innenbehälter 6 und auch das Isolationselement 36 weisen außenseitig, das heißt, dem thermischen Schild 21 zugewandt, etwa eine dem Siedepunkt des Heliums He entsprechende Temperatur auf. Bei der Montage der Isolationsschicht 38 wird darauf geachtet, dass die Lagen aus Reflexionsfolie und Abstandhalter eine möglichst große mechanische Pressung haben, um zu erreichen, dass alle Lagen der Isolationsschicht 38 möglichst isotherm sind. Das Isolationselement 36 kann als erstes Isolationselement 36 bezeichnet werden.

Zwischen dem Isolationselement 36 und dem thermischen Schild 21 ist der den Innenbehälter 6 vollständig umlaufende Zwischenraum 25 vorgesehen. Der Zwischenraum 25 ist auch zwischen dem Isolationselement 36 und den Deckelabschnitten 23, 24 des thermischen Schilds 21 vorgesehen. Der Zwischenraum 25 weist eine Spaltbreite auf, die bevorzugt 5 bis 15 Millimeter, weiter bevorzugt 10 Millimeter, beträgt. Mit Hilfe des Zwischenraums 25 ist der thermische Schild 21 umlaufend beabstandet von der Kupferschicht 37 des Isolationselements 36 des Innenbehälters 6 angeordnet und berührt diese nicht. Der Wärmeeinfall durch Strahlung wird dadurch auf das physikalisch mögliche Minimum reduziert. Wärme von den Oberflächen des Innenbehälters 6 zu dem thermischen Schild 21 wird nur durch Strahlung und Restgasleitung übertragen.

Zwischen dem thermischen Schild 21 und dem Außenbehälter 2, das heißt in dem Zwischenraum 12, ist ein weiteres, insbesondere ein zweites, Isolationselement 39 vorgesehen. Das Isolationselement 39 füllt vorzugsweise einerseits den Zwischenraum 12 im Bereich des Innenbehälters 6 vollständig aus, so dass dort das Isolationselement 39 den thermischen Schild 21 außenseitig und den Außenbehälter 2 innenseitig kontaktiert. Das Isolationselement 39 umschließt den thermischen Schild 21 bis auf dessen zweiten Deckelabschnitt 24, das heißt, es umschließt den ersten Deckelabschnitt 23 und den Basisabschnitt 22. Ferner wird der zylindrische Basisabschnitt 15 und der zweite Deckelabschnitt 17 des Kühlmittelbehälters 14 von dem Isolationselement 39 umschlossen. Das Isolationselement 39 ist vorzugsweise ebenfalls eine sogenannte MLI.

Das Isolationselement 39 ist sowohl zwischen den jeweiligen Basisabschnitten 3, 15, 22 des Außenbehälters 2, des Kühlmittelbehälters 14 und des thermischen Schilds 21 als auch zwischen dem ersten Deckelabschnitt 23 des thermischen Schilds 21 und dem ersten Deckelabschnitt 4 des Außenbehälters 2 sowie zwischen dem zweiten Deckelabschnitt 17 des Kühlmittelbehälters 14 und dem zweiten Deckelabschnitt 5 des Außenbehälters 2 vorgesehen. Das Isolationselement 39 kann somit auch den Kühlmittelbehälter 14 umhüllen. Das Isolationselement 39 umfasst abwechselnd angeordnete Lagen aus einer Reflexionsfolie 40, insbesondere einer Aluminiumfolie oder einer metallbedampften Kunststofffolie, und einem Abstandhalter 41, insbesondere Glaspapier. Die Anzahl der Lagen ist beliebig. Der Abstandhalter 41 kann neben Glaspapier auch Glasseide, Glasgittergewebe oder dergleichen umfassen.

Die Lagen an Reflexionsfolie 40 und Abstandhalter 41 sind abweichend von dem zuvor beschriebenen Isolationselement 36 des Innenbehälters 6 flauschig in den Zwischenraum 12 eingebracht. Flauschig heißt hierbei, dass die Lagen aus Reflexionsfolie 40 und Abstandhalter 41 nicht gepresst sind, so dass durch eine Prägung und Perforierung der Reflexionsfolie 40 das Isolationselement 39 und damit der Zwischenraum 12 störungsfrei evakuiert werden kann.

Das Isolationselement 39 umfasst zumindest eine zweite Kühlleitung 42 bis 46, mit deren Hilfe das Isolationselement 39 mit dem gasförmigen Stickstoff GN₂ aktiv kühlbar ist. Unter einer aktiven Kühlung ist vorliegend zu verstehen, dass der gasförmige Stickstoff GN₂ zur Kühlung des Isolationselements 39 durch dieses hindurchgeleitet oder an diesem entlanggeleitet wird. Die Anzahl der zweiten Kühlleitungen 42 bis 46 ist beliebig. Beispielsweise können, wie in der Fig. 3 gezeigt, fünf derartige zweite Kühlleitungen 42 bis 46 vorgesehen sein. Es können auch drei zweite Kühlleitungen 42 bis 46 vorgesehen sein. Die zweiten Kühlleitungen 42 bis 46 sind mit Hilfe von Rohrbögen 47 bis 49 miteinander in Fluidverbindung. Die zweiten Kühlleitungen 42 bis 46 können so angeordnet sein, dass diese sowohl den Basisabschnitt 22 als auch den ersten Deckelabschnitt 23 des thermischen Schilds 21 umlaufen. Die zweiten Kühlleitungen 42 bis 46 können auch um den Kühlmittelbehälter 14 umlaufen. Die zweiten Kühlleitungen 42 bis 46 sind dem Kühlsystem 13 zugeordnet.

Vorzugsweise ist die zweite Kühlleitung 42 mit Hilfe einer Zuleitung 50 mit dem Phasenseparator 35 in Fluidverbindung. Über die Zuleitung 50 wird den zweiten Kühlleitungen 42 bis 44 der gasförmige Stickstoff GN₂ zugeführt, der mit Hilfe des Phasenseparators 35 von dem flüssigen Stickstoff LN₂ abgetrennt worden ist. Über eine Ableitung 51 kann der erwärmte gasförmige Stickstoff GN₂ der Umgebung zugeführt werden. Der Phasenseparator 35 ist mit Hilfe der ersten Kühlleitung 26 in Fluidverbindung mit dem Kühlmittelbehälter 14. Dabei ist der Phasenseparator 35 zwischen der ersten Kühlleitung 26 und der zweiten Kühlleitung 42 angeordnet.

Optional können einige zweite Kühlleitungen 45, 46 direkt mit dem Kühlmittelbehälter 14 verbunden sein. In diesem Fall ist der Phasenseparator 35 den zweiten Kühlleitungen 45, 46 nicht vorgeschaltet. Hierbei kann sogenanntes Boil-Off-Gas des Kühlmittelbehälters 14, das heißt, gasförmiger Stickstoff GN₂, über eine Zuleitung 52 den zweiten Kühlleitungen 45, 46 zugeführt werden. An einer Ableitung 53 der zweiten Kühlleitungen 45, 46 zu der Umgebung ist ein Druckhalteventil 54 des Kühlmittelbehälters 14 vorgesehen, das den erwärmten gasförmigen Stickstoff GN2 an die Umgebung abgibt.

Die zweiten Kühlleitungen 42 bis 46 sind, wie in der Fig. 4 gezeigt, durch das Isolationselement 39 hindurchgeführt. Das Isolationselement 39 weist zusätzlich zu den Lagen aus Reflexionsfolie 40 und Abstandhalter 41 eine Vielzahl an Wärmeleitfolien 55 bis 57 auf. Die Anzahl der Wärmeleitfolien 55 bis 57 ist beliebig. Die Wärmeleitfolien 55 bis 57 sind vorzugsweise als hochreine Aluminium- oder Kupferfolien ausgebildet. Die Wärmeleitfolien 55 bis 57 umlaufen den thermischen Schild 21. Insbesondere ist der thermische Schild 21 innerhalb einer dritten Wärmeleitfolie 57 angeordnet, die dritte Wärmeleitfolie 57 ist innerhalb einer zweiten Wärmeleitfolie 56 angeordnet und die zweite Wärmeleitfolie 56 ist innerhalb einer ersten Wärmeleitfolie 55 angeordnet.

Zwischen den Wärmeleitfolien 55 bis 57 sind jeweils Lagen der Reflexionsfolie 40 und des Abstandhalters 41 angeordnet. Beispielsweise sind zwischen dem thermischen Schild 21 und der dritten Wärmeleitfolie 57 vier Lagen Reflexionsfolie 40 und Abstandhalter 41 vorgesehen. Ferner können zwischen der dritten Wärmeleitfolie 57 und der zweiten Wärmeleitfolie 56 beispielsweise zehn Lagen Reflexionsfolie 40 und Abstandhalter 41 vorgesehen sein. Zwischen der zweiten Wärmeleitfolie 56 und der ersten Wärmeleitfolie 55 können zwölf Lagen Reflexionsfolie 40 und Abstandhalter 41 vorgesehen sein und zwischen der ersten Wärmeleitfolie 55 und dem Außenbehälter 2 können beispielsweise vierzehn Lagen Reflexionsfolie 40 und Abstandhalter 41 vorgesehen sein. Die Anzahl der Lagen ist jedoch jeweils beliebig.

Vorzugsweise ist jeder zweiten Kühlleitung 42 bis 46 eine derartige Wärmeleitfolie 55 bis 57 zugeordnet. Beispielsweise ist der zweiten Kühlleitung 42 die dritte Wärmeleitfolie 57, der zweiten Kühlleitung 43 die zweite Wärmeleitfolie 56 und der zweiten Kühlleitung 44 die erste Wärmeleitfolie 55 zugeordnet. Weiter können auch den optionalen zweiten Kühlleitungen 45, 46 derartige Wärmeleitfolien 55 bis 57 zugeordnet sein. Die Wärmeleitfolien 55 bis 57 weisen vorzugsweise jeweils eine größere Dicke auf als die Reflexionsfolien 40. Beispielsweise weisen die Wärmeleitfolien 55 bis 57 jeweils eine Dicke von 0,5 bis 1,5 Millimeter auf. Die Dicke der Wärmeleitfolien 55 bis 57 kann längs der zweiten Kühlleitungen 42 bis 46 variieren. Vorzugsweise sind die zweiten Kühlleitungen 42 bis 46 stoffschlüssig mit den ihnen zugeordneten Wärmeleitfolien 55 bis 57 verbunden. Beispielsweise sind die zweiten Kühlleitungen 42 bis 46 mit der jeweiligen Wärmeleitfolie 55 bis 57 verklebt. Für den Fall, dass die Wärmeleitfolien 55 bis 57 aus Kupfer gefertigt sind, werden die zweiten Kühlleitungen 42 bis 46 mit diesen verlötet. Für den Fall, dass die Wärmeleitfolien 55 bis 57 aus Aluminium gefertigt sind, werden die zweiten Kühlleitungen 42 bis 46 mit diesen verklebt. Hierdurch ist ein guter Wärmeübergang zwischen der jeweiligen zweiten Kühlleitung 42 bis 46 und der dieser zugeordneten Wärmeleitfolie 55 bis 57 gewährleistet.

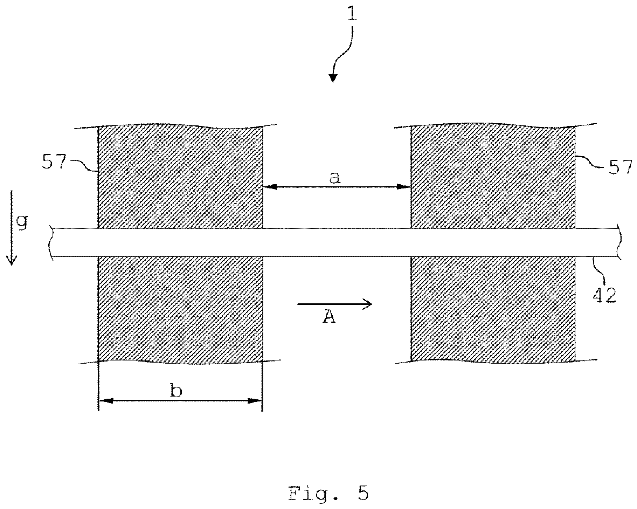

Die Wärmeleitfolien 55 bis 57 sind, wie in der Fig. 5 in einer Detailansicht gezeigt, bahnförmig und weisen eine Breite b von beispielsweise 1 Meter auf. Zwischen zwei benachbarten dritten Wärmeleitfolien 57 beziehungsweise ersten oder zweiten Wärmeleitfolien 55, 56 ist in der Axialrichtung A betrachtet jeweils ein Abstand a vorgesehen. Das heißt, die Wärmeleitfolien 55 bis 57 sind in der Axialrichtung A voneinander beabstandet angeordnet und umlaufen den thermischen Schild 21 umfänglich. Die Bahnen der Wärmeleitfolien 55 bis 57 können einander jeweils auch überlappen. Der Abstand a kann beispielsweise 0,1 bis 1 Meter betragen. Die Wärmeleitfolien 55 bis 57 werden umfänglich um den thermischen Schild 21 mit in das Isolationselement 39 eingewickelt.

Die Funktionsweise des Transportbehälters 1 wird im Folgenden erläutert. Vor dem Befüllen des Innenbehälters 6 mit Helium He wird zunächst der thermische Schild 21 mit Hilfe von tiefkaltem, anfangs gasförmigem und später flüssigem, Stickstoff N₂ zumindest annähernd oder ganz bis auf den Siedepunkt (1,3 bara, 7,95 K) des flüssigen Stickstoffs LN₂ abgekühlt. Der Innenbehälter 6 wird dabei noch nicht aktiv gekühlt. Bei dem Abkühlen des thermischen Schilds 21 wird das sich noch in den Zwischenräumen 12, 20, 25 befindende Vakuum-Restgas an dem thermischen Schild 21 ausgefroren. Hierdurch kann bei einem Befüllen des Innenbehälters 6 mit dem Helium He verhindert werden, dass das Vakuum-Restgas außenseitig auf dem Innenbehälter 6 ausfriert und somit die metallisch blanke Oberfläche der Kupferschicht 37 des Isolationselements 36 des Innenbehälters 6 verunreinigt. Sobald der thermische Schild 21 und der Kühlmittelbehälter 14 vollständig abgekühlt sind und der Kühlmittelbehälter 14 wieder vollständig mit Stickstoff N₂ aufgefüllt ist, wird der Innenbehälter 6 mit dem Helium He befüllt.

Der Transportbehälter kann zum Transportieren des Heliums He nun auf ein Transportfahrzeug, wie beispielsweise einen Lastkraftwagen oder ein Schiff, verbracht werden. Hierbei wird der thermische Schild 21 kontinuierlich mit Hilfe des flüssigen Stickstoffs LN₂ gekühlt. Der flüssige Stickstoff LN₂ wird dabei verbraucht und siedet in der ersten Kühlleitung 26 beziehungsweise in den ersten Kühlleitungen 26. Dabei entstehende Gasblasen werden dem in dem Kühlsystem 13 bezüglich der Schwerkraftrichtung g am höchsten angeordneten Phasenseparator 35 zugeführt. Sobald der gasförmige Stickstoff GN₂ mit Hilfe des Phasenseparators 35 aus dem Kühlsystem 13 entfernt ist, strömt flüssiger Stickstoff LN₂ in den Phasenseparator 35 nach. Der gasförmige Stickstoff GN₂ wird über die Zuleitung 50 den zweiten Kühlleitungen 42 bis 44 zugeführt. Zusätzlich kann direkt von dem Kühlmittelbehälter 14 gasförmiger Stickstoff GN₂ den zweiten Kühlleitungen 45, 46 zugeführt werden.

Dadurch, dass der thermische Schild 21 auch zwischen dem Kühlmittelbehälter 14 und dem Innenbehälter 6 angeordnet ist, kann auch bei einem sinkenden Füllstand beziehungsweise Flüssigkeitsstand an Stickstoff N₂ in dem Kühlmittelbehälter 14 zuverlässig gewährleistet werden, dass der Innenbehälter 6 ausreichend gekühlt wird. Dadurch, dass der Innenbehälter 6 von dem thermischen Schild 21 vollständig umgeben ist, ist gewährleistet, dass der Innenbehälter 6 nur von Flächen umgeben ist, die eine dem Siedepunkt (1,3 bara, 79,5 K) von Stickstoff N₂ entsprechende Temperatur aufweisen. Hierdurch besteht zwischen dem thermischen Schild 21 (79,5 K) und dem Innenbehälter 6 (4,2 bis 6 K) nur eine geringe Temperaturdifferenz. Dies verlängert die Haltezeit für das Helium He.

Weiterhin kann dadurch, dass das zwischen dem thermischen Schild 21 und dem Außenbehälter 2 angeordnete Isolationselement 39 mit Hilfe des gasförmigen Stickstoffs GN₂ aktiv gekühlt ist, die Haltezeit für das Helium He nochmals verlängert werden. Im Vergleich zu bekannten Transportbehältern kann die Haltezeit für das Helium He somit signifikant verlängert werden. Wärme von dem Innenbehälter 6 zu dem thermischen Schild 21 wird dabei nur durch Strahlung und Restgasleitung übertragen. Der Transportbehälter 1 weist insbesondere eine Haltezeit für das Helium He von mehr als 60 Tagen auf, wobei es zudem keine Beschränkungen hinsichtlich der natürlichen Umgebungstemperatur gibt.

### Verwendete Bezuaszeichen

- 1: Transportbehälter
- 2: Außenbehälter
- 3: Basisabschnitt
- 4: Deckelabschnitt
- 5: Deckelabschnitt
- 6: Innenbehälter
- 7: Gaszone
- 8: Flüssigkeitszone
- 9: Basisabschnitt
- 10: Deckelabschnitt
- 11: Deckelabschnitt
- 12: Zwischenraum
- 13: Kühlsystem
- 14: Kühlmittelbehälter
- 15: Basisabschnitt
- 16: Deckelabschnitt
- 17: Deckelabschnitt
- 18: Gaszone
- 19: Flüssigkeitszone
- 20: Zwischenraum
- 21: thermischer Schild
- 22: Basisabschnitt
- 23: Deckelabschnitt
- 24: Deckelabschnitt
- 25: Zwischenraum
- 26: Kühlleitung
- 27: Abschnitt
- 28: Abschnitt
- 29: Abschnitt
- 30: Abschnitt
- 31: Anschlussleitung
- 32: Verteiler
- 33: Sammler
- 34: Anschlussleitung
- 35: Phasenseparator
- 36: Isolationselement
- 37: Kupferschicht
- 38: Isolationsschicht
- 39: Isolationselement
- 40: Reflexionsfolie
- 41: Abstandhalter
- 42: Kühlleitung
- 43: Kühlleitung
- 44: Kühlleitung
- 45: Kühlleitung
- 46: Kühlleitung
- 47: Rohrbogen
- 48: Rohrbogen
- 49: Rohrbogen
- 50: Zuleitung
- 51: Ableitung
- 52: Zuleitung
- 53: Ableitung
- 54: Druckhalteventil
- 55: Wärmeleitfolie
- 56: Wärmeleitfolie
- 57: Wärmeleitfolie

- a: Abstand
- A: Axialrichtung
- b: Breite
- g: Schwerkraftrichtung
- GN₂: Stickstoff
- H: Horizontale
- He: Helium
- LN₂: Stickstoff
- L2: Länge
- N₂: Stickstoff
- M1: Mittelachse
- α: Winkel

## Patentansprüche

1. Transportbehälter (1) für Helium (He), mit einem Innenbehälter (6) zum Aufnehmen des Heliums (He), einem Kühlmittelbehälter (14) zum Aufnehmen einer kryogenen Flüssigkeit (N₂), einem Außenbehälter (2), in dem der Innenbehälter (6) und der Kühlmittelbehälter (14) aufgenommen sind, einem thermischen Schild (21), in dem der Innenbehälter (6) aufgenommen ist und der mit Hilfe einer flüssigen Phase der kryogenen Flüssigkeit (LN₂) aktiv kühlbar ist, wobei der thermische Schild (21) zumindest eine erste Kühlleitung (26) aufweist, in der zum aktiven Kühlen des thermischen Schilds (21) die flüssige Phase der kryogenen Flüssigkeit (LN₂) aufnehmbar ist, und einem Isolationselement (39), das zwischen dem Außenbehälter (2) und dem thermischen Schild (21) angeordnet ist, **dadurch gekennzeichnet dass** das Isolationselement mit Hilfe einer gasförmigen Phase der kryogenen Flüssigkeit (GN₂) aktiv kühlbar ist, wobei das Isolationselement (39) zumindest eine zweite Kühlleitung (42 - 46) aufweist, in der zum aktiven Kühlen des Isolationselements (39) die gasförmige Phase der kryogenen Flüssigkeit (GN₂) aufnehmbar ist, und wobei die zumindest eine erste Kühlleitung (26) ein von der zumindest einen zweiten Kühlleitung (42 - 46) getrenntes Bauteil ist.

2. Transportbehälter nach Anspruch 1, ferner umfassend einen Phasenseparator (35) zum Trennen der flüssigen Phase der kryogenen Flüssigkeit (LN₂) von der gasförmigen Phase der kryogenen Flüssigkeit (GN₂).

3. Transportbehälter nach Anspruch 2, wobei der Phasenseparator (35) mit Hilfe der zumindest einen ersten Kühlleitung (26) in Fluidverbindung mit dem Kühlmittelbehälter (14) ist.

4. Transportbehälter nach Anspruch 2 oder 3, wobei der Phasenseparator (35) zwischen der zumindest einen ersten Kühlleitung (26) und der zumindest einen zweiten Kühlleitung (42 - 46) angeordnet ist.

5. Transportbehälter nach einem der Ansprüche 1 - 4, wobei die zumindest eine zweite Kühlleitung (42 - 46) in direkter Fluidverbindung mit dem Kühlmittelbehälter (14) ist, um von diesem die gasförmige Phase der kryogenen Flüssigkeit (GN₂) aufzunehmen.

6. Transportbehälter nach einem der Ansprüche 1 - 5, wobei die zumindest eine zweite Kühlleitung (42 - 46) durch das Isolationselement (39) hindurchgeführt ist.

7. Transportbehälter nach Anspruch 6, wobei das Isolationselement (39) mehrere abwechselnd angeordnete Lagen aus einer Reflexionsfolie (40), insbesondere einer Aluminiumfolie, und einem Abstandhalter (41), insbesondere einem Glaspapier, aufweist, und wobei die zumindest eine zweite Kühlleitung (42 - 46) zwischen den Lagen hindurchgeführt ist.

8. Transportbehälter nach Anspruch 7, wobei das Isolationselement (39) zumindest eine Wärmeleitfolie (55 - 57), insbesondere eine hochreine Aluminium- oder Kupferfolie, aufweist, mit der die zumindest eine zweite Kühlleitung (42 - 46) thermisch leitend verbunden ist, und wobei die zumindest eine Wärmeleitfolie (55 - 57) zwischen den Lagen der Reflexionsfolie (40) und des Abstandhalters (41) positioniert ist.

9. Transportbehälter nach Anspruch 8, wobei die zumindest eine Wärmeleitfolie (55 - 57) den thermischen Schild (21) umschließt.

10. Transportbehälter nach Anspruch 8 oder 9, wobei das Isolationselement (39) mehrere Wärmeleitfolien (55 - 57) aufweist, und wobei zwischen den Wärmeleitfolien (55 - 57) Lagen der Reflexionsfolie (40) und des Abstandhalters (41) angeordnet sind.

11. Transportbehälter nach Anspruch 10, wobei jeder Wärmeleitfolie (55 - 57) eine zweite Kühlleitung (42 - 46) zugeordnet ist, die mit der jeweiligen Wärmeleitfolie (55 - 57) thermisch leitend verbunden ist.

12. Transportbehälter nach Anspruch 11, wobei die zweiten Kühlleitungen (42 - 46) mit Hilfe von Rohrbögen (47 - 49) miteinander in Fluidverbindung stehen.

13. Transportbehälter nach einem der Ansprüche 8 - 12, wobei eine Dicke der zumindest einen Wärmeleitfolie (55 - 57) größer als eine Dicke der Reflexionsfolie (40) ist.

14. Transportbehälter nach einem der Ansprüche 1 - 13, wobei der Kühlmittelbehälter (14) außerhalb des thermischen Schilds (21) angeordnet ist.

15. Transportbehälter nach Anspruch 14, wobei der thermische Schild (21) einen von dem Kühlmittelbehälter (14) getrennten Deckelabschnitt (23) aufweist, der zwischen dem Innenbehälter (6) und dem Kühlmittelbehälter (14) angeordnet ist.

## Claims

1. Transport container (1) for helium (He), comprising an inner container (6) for receiving the helium (He), a coolant container (14) for receiving a cryogenic liquid (N₂), an outer container (2) in which the inner container (6) and the coolant container (14) are received, a thermal shield (21) in which the inner container (6) is received and which can be actively cooled with the aid of a liquid phase of the cryogenic liquid (LN₂), wherein the thermal shield (21) has at least one first cooling line (26) in which, for the active cooling of the thermal shield (21), the liquid phase of the cryogenic liquid (LN₂) can be received, and an insulating element (39) which is arranged between the outer container (2) and the thermal shield (21), **characterized in that** the insulating element can be actively cooled with the aid of a gaseous phase of the cryogenic liquid (GN₂), wherein the insulating element (39) has at least one second cooling line (42-46) in which, for the active cooling of the insulating element (39), the gaseous phase of the cryogenic liquid (GN₂) can be received, and wherein the at least one first cooling line (26) is a component which is separate from the at least one second cooling line (42-46).

2. Transport container according to Claim 1, further comprising a phase separator (35) for separating the liquid phase of the cryogenic liquid (LN₂) from the gaseous phase of the cryogenic liquid (GN₂).

3. Transport container according to Claim 2, wherein the phase separator (35) is in fluid connection with the coolant container (14) with the aid of the at least one first cooling line (26).

4. Transport container according to Claim 2 or 3, wherein the phase separator (35) is arranged between the at least one first cooling line (26) and the at least one second cooling line (42-46).

5. Transport container according to one of Claims 1-4, wherein the at least one second cooling line (42-46) is in direct fluid connection with the coolant container (14) in order to receive therefrom the gaseous phase of the cryogenic liquid (GN₂).

6. Transport container according to one of Claims 1-5, wherein the at least one second cooling line (42-46) is passed through the insulating element (39).

7. Transport container according to Claim 6, wherein the insulating element (39) comprises a plurality of alternately arranged layers of a reflective foil (40), in particular an aluminum foil, and a spacer (41), in particular a glass paper, and wherein the at least one second cooling line (42-46) is passed through between the layers.

8. Transport container according to Claim 7, wherein the insulating element (39) comprises at least one heat-conducting foil (55-57), in particular a high-purity aluminum or copper foil, to which the at least one second cooling line (42-46) is thermally conductively connected, and wherein the at least one heat-conducting foil (55-57) is positioned between the layers of the reflective foil (40) and the spacer (41).

9. Transport container according to Claim 8, wherein the at least one heat-conducting foil (55-57) surrounds the thermal shield (21).

10. Transport container according to Claim 8 or 9, wherein the insulating element (39) comprises a plurality of heat-conducting foils (55-57), and wherein layers of the reflective foil (40) and the spacer (41) are arranged between the heat-conducting foils (55-57).

11. Transport container according to Claim 10, wherein each heat-conducting foil (55-57) is associated with a second cooling line (42-46), which is thermally conductively connected to the respective heat-conducting foil (55-57).

12. Transport container according to Claim 11, wherein the second cooling lines (42-46) are in fluid connection with each other with the aid of pipe bends (47-49).

13. Transport container according to one of Claims 8-12, wherein a thickness of the at least one heat-conducting foil (55-57) is greater than a thickness of the reflective foil (40).

14. Transport container according to one of Claims 1-13, wherein the coolant container (14) is arranged outside the thermal shield (21).

15. Transport container according to Claim 14, wherein the thermal shield (21) comprises a lid section (23) separate from the coolant container (14), which lid section is arranged between the inner container (6) and the coolant container (14).

## Revendications

1. Conteneur (1) pour de l'hélium (He), comprenant un récipient interne (6) pour recevoir l'hélium (He), un récipient de liquide de refroidissement (14) pour recevoir un fluide cryogénique (N₂), un récipient externe (2), dans lequel le récipient interne (6) et le récipient de liquide de refroidissement (14) sont reçus, un bouclier thermique (21), dans lequel le récipient interne (6) est reçu et qui peut être refroidi activement à l'aide d'une phase liquide du fluide cryogénique (LN₂), dans lequel le bouclier thermique (21) présente au moins une conduite de refroidissement (26), dans laquelle, pour le refroidissement actif du bouclier thermique (21), la phase liquide du fluide cryogénique (LN₂) peut être reçue et un élément d'isolation (39), qui est agencé entre le récipient externe (2) et le bouclier thermique (21), **caractérisé en ce que** l'élément d'isolation peut être refroidi activement à l'aide d'une phase gazeuse du fluide cryogénique (GN₂), dans lequel l'élément d'isolation (39) présente au moins une seconde conduite de refroidissement (42 - 46), dans laquelle, pour le refroidissement actif de l'élément d'isolation (39), la phase gazeuse du fluide cryogénique (GN₂) peut être reçue et dans lequel l'au moins une première conduite de refroidissement (26) est un composant séparé de l'au moins une seconde conduite de refroidissement (42 - 46).

2. Conteneur selon la revendication 1, comprenant en outre un séparateur de phase (35) pour séparer la phase liquide du fluide cryogénique (LN₂) de la phase gazeuse du fluide cryogénique (GN₂).

3. Conteneur selon la revendication 2, dans lequel le séparateur de phase (35) est en liaison fluidique avec le récipient de liquide de refroidissement (14) à l'aide de l'au moins une première conduite de refroidissement (26).

4. Conteneur selon la revendication 2 ou 3, dans lequel le séparateur de phase (35) est agencé entre l'au moins une première conduite de refroidissement (26) et l'au moins une seconde conduite de refroidissement (42 - 46).

5. Conteneur selon l'une quelconque des revendications 1 à 4, dans lequel l'au moins une seconde conduite de refroidissement (42 - 46) est en liaison fluidique directe avec le récipient de liquide de refroidissement (14), afin de recevoir de celui-ci la phase gazeuse du fluide cryogénique (GN₂).

6. Conteneur selon l'une quelconque des revendications 1 à 5, dans lequel l'au moins une seconde conduite de refroidissement (42 - 46) traverse l'élément d'isolation (39).

7. Conteneur selon la revendication 6, dans lequel l'élément d'isolation (39) présente plusieurs couches agencées en alternance constituées d'une feuille réfléchissante (40), en particulier une feuille d'aluminium et d'un écarteur (41), en particulier du papier de verre et dans lequel l'au moins une seconde conduite de refroidissement (42 - 46) traverse les couches.

8. Conteneur selon la revendication 7, dans lequel l'élément d'isolation (39) présente au moins un film conducteur de chaleur (55 - 57), en particulier un film de cuivre ou d'aluminium à haute pureté, avec lequel l'au moins une seconde conduite de refroidissement (42 - 46) est reliée de manière thermiquement conductrice et dans lequel l'au moins un film conducteur de chaleur (55 - 57) est positionné entre les couches de la feuille réfléchissante (40) et l'écarteur (41).

9. Conteneur selon la revendication 8, dans lequel l'au moins un film conducteur de chaleur (55 - 57) entoure le bouclier thermique (21).

10. Conteneur selon la revendication 8 ou 9, dans lequel l'élément d'isolation (39) présente plusieurs films conducteurs de chaleur (55 - 57) et dans lequel, entre les films conducteurs de chaleur (55 - 57), des couches de la feuille réfléchissante (40) et de l'écarteur (41) sont agencées.

11. Conteneur selon la revendication 10, dans lequel une seconde conduite de refroidissement (42 - 46) est associée à chaque film conducteur de chaleur (55 - 57), laquelle est reliée de manière thermiquement conductrice au film conducteur de chaleur (55 - 57) respectif.

12. Conteneur selon la revendication 11, dans lequel les secondes conduites de refroidissement (42 - 46) sont en liaison fluidique les unes avec les autres à l'aide de coudes (47 - 49).

13. Conteneur selon l'une quelconque des revendications 8 à 12, dans lequel une épaisseur de l'au moins un film conducteur de chaleur (55 - 57) est supérieure à une épaisseur de la feuille réfléchissante (40).

14. Conteneur selon l'une quelconque des revendications 1 à 13, dans lequel le récipient de liquide de refroidissement (14) est disposé à l'extérieur du bouclier thermique (21).

15. Conteneur selon la revendication 14, dans lequel le bouclier thermique (21) présente une section de couvercle (23) séparée du récipient de liquide de refroidissement (14), qui est disposée entre le récipient interne (6) et le récipient de liquide de refroidissement (14).
